# FASCICULE DE BREVET EUROPEEN

(11) **EP 3 256 771 B1**
(45) Date de publication et mention de la délivrance du brevet: **02.01.2019**
(21) Numéro de dépôt: 16705259.6
(22) Date de dépôt: 05.02.2016
(51) Int. Cl.: F16L 59/20, F16L 1/19, F16L 1/20, F16L 7/02

(54) **DISPOSITIF D'ANTI-GLISSEMENT ET D'AUTO-CENTRAGE D'UN TUBE INTERNE A L'INTÉRIEUR D'UN TUBE EXTERNE D'UN ÉLÉMENT DE LONGUEUR UNITAIRE DE CONDUITE SOUS-MARINE POUR LE TRANSPORT DE FLUIDES**
GLEITSCHUTZVORRICHTUNG ZUR SELBSTZENTRIERUNG EINES INNENROHRES IN EINEM AUSSENROHR EINES ELEMENTS EINER EINHEITSLÄNGE EINER UNTERWASSERLEITUNG ZUM TRANSPORT VON FLÜSSIGKEITEN
ANTI-SLIDE DEVICE FOR THE SELF-CENTRING OF AN INNER TUBE INSIDE AN OUTER TUBE OF AN ELEMENT OF UNIT LENGTH OF A SUBSEA PIPELINE FOR TRANSPORTING FLUIDS

(30) Priorité: 11.02.2015 FR 1551106
(43) Date de publication de la demande: 20.12.2017
(73) Titulaire: SAIPEM S.A., 78180 Montigny Le Bretonneux (FR)
(72) Inventeur: PIONETTI, François-Régis, 50450 La Baleine (FR)
(74) Mandataire: Boura, Olivier
(86) Numéro de dépôt international: PCT/FR2016/050252
(87) Numéro de publication internationale: WO 2016/128655

(56) Documents cités:
- GB-A- 2 317 934
- GB-A- 2 318 400

## Description

### Arrière-plan de l'invention

La présente invention se rapporte au domaine général des conduites sous-marines reposant au fond de la mer ou assurant la liaison fond-surface pour le transfert d'hydrocarbures, notamment de pétrole et de gaz, issus de puits de production sous-marins.

Elle concerne plus précisément des conduites sous-marines coaxiales de type « Pipe In Pipe » ou PIP, c'est-à-dire « conduite dans une conduite », dans laquelle un tube interne transporte les fluides et un tube externe coaxial au précédent, appelé aussi « enveloppe externe », est en contact avec le milieu ambiant, c'est-à-dire avec l'eau. L'espace annulaire entre les deux tubes peut être rempli d'un matériau isolant ou encore être vidé de tout gaz de façon à assurer une isolation thermique pour les fluides circulant dans le conduit interne. De telles conduites coaxiales sous-marines sont particulièrement utilisées dans le cadre d'installations par grandes profondeurs où la température de l'eau est typiquement de 4°C.

Généralement, ces conduites coaxiales sont assemblées à terre en éléments de longueur unitaire (on parle de double, triple ou quadruple joints, ci-après indifféremment dénommées « quad-joints » pour quadruple sections de tube), de l'ordre de 10 à 100m selon la capacité de tenue en charge du système de pose. Ces rames de conduites sont alors transportées en mer sur un navire de pose.

Lors de la pose, les quad-joints sont raccordés les unes aux autres à bord du navire et au fur et à mesure de leur pose en mer. La pose peut s'effectuer par l'intermédiaire d'une tour de pose en J positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer.

Cette méthode de pose en J nécessite de déplacer chaque nouveau quad-joint d'une position horizontale (le long du pont du navire de pose) à une position verticale pour s'aligner avec la tour de pose en J. Le quad-joint est maintenu vertical sur la tour de pose pour permettre de souder son extrémité inférieure à l'extrémité supérieure de la conduite. Une fois le quad-joint soudé à la conduite, ce dernier est descendu dans la mer en déplaçant le navire de pose vers l'avant d'une avance correspondant à la longueur du quad-joint.

Appliquée à des conduites coaxiales de type « PIP », la méthode de pose en J prévoit de souder verticalement le quad-joint sur la conduite sous-marine déjà en place. Le nouveau quad-joint est présenté avec un décalage vers le haut entre le tube externe et le tube interne pour permettre de souder le tube interne sur celui de la conduite sous-marine en attente dans le dispositif de maintien de la tour de pose en J, puis de faire coulisser le tube externe du quad-joint par rapport au tube interne vers le bas afin de souder son extrémité inférieure à l'extrémité libre correspondante du tube externe de la conduite sous-marine. Cette dernière est ensuite descendue dans la mer et l'opération se répète avec un nouveau quad-joint.

En pratique, une telle méthode de pose présente un certain nombre de problèmes. En particulier, lors du levage du nouveau quad-joint, le tube interne doit être maintenu en position pour empêcher son glissement libre. Jusqu'à présent, des dispositifs particuliers complexes étaient placées en extrémité pour étayer ce maintien avant d'être retirées après soudage du tube interne sur la conduite sous-marine. Or, le recours à des tels dispositifs s'avère coûteux en temps de pose. De plus, lors de la pose du tube interne du quad-joint sur le tube interne de la conduite sous-marine en attente verticale dans la tour de pose en J, le tube interne, s'il est libre, a tendance à flamber en hélice dans le tube externe de la conduite sous-marine, de sorte qu'il est ensuite généralement nécessaire d'ajuster la partie haute de la conduite pour rattraper ce jeu (on coupe le tube interne d'autant que nécessaire). Enfin, l'étape de coulissement du tube externe par rapport au tube interne risque d'entraîner l'arrachement de certaines pièces positionnées autour du tube interne du quad-joint (telles que l'isolation thermique, les câbles chauffant, les fibres optiques, les cales de centrage, etc.).

Le document GB-A-2317934 décrit un élément unitaire de conduite sous-marine selon le préambule de la revendication 1.

### Objet et résumé de l'invention

La présente invention a donc pour but principal de proposer un dispositif d'anti-glissement et d'auto-centrage d'un tube interne à l'intérieur d'un tube externe qui ne présente pas les inconvénients précités.

Conformément à l'invention, ce but est atteint grâce à un élément de longueur unitaire de conduite sous-marine pour le transport de fluides selon la revendication 1.

En assurant une mise en compression de l'anneau en matériau élastomère par serrage des plaques entre elles, le dispositif selon l'invention permet notamment d'assurer la concentricité des tubes et le maintien vertical du tube interne à l'intérieur du tube externe de l'élément de longueur unitaire de conduite (ou quad-joint). En effet, le dispositif est appliqué au niveau d'un épaulement du tube interne avec les plaques de compression de l'élastomère positionnées de part et d'autre de cet épaulement de sorte que les plaques se trouvent stoppées par l'épaulement. Le dispositif est ainsi totalement fixe par rapport au tube interne, de sorte que le glissement nécessaire à l'assemblage de la conduite sous-marine se trouve forcé et contrôlé et ne peut se faire que sur la surface interne du tube externe.

De plus, l'effort de serrage est appliqué sur les plaques du dispositif afin d'assurer une forte contrainte d'anti-glissement entre les tubes interne et externe. Les caractéristiques du dispositif selon l'invention et l'effort de serrage sont calibrés en fonction du poids du tube interne de sorte à empêcher tout glissement du tube interne sous l'effet de son propre poids mais à autoriser un tel glissement contrôlé pour des valeurs supérieures de 15% à 50% de ce poids (le facteur de charge est défini lors de la conception du dispositif en fonction des caractéristiques des bras de chargement de la tour de pose en J, des tubes composant la conduite sous-marine et de leurs accessoires).

Plus précisément, le facteur de charge du dispositif doit être choisi pour éviter le glissement intempestif (c'est-à-dire non contrôlé) du tube interne par rapport au tube externe lors de son positionnement vertical dans la tour de pose en J (et garantir ainsi la sécurité des opérateurs). Le facteur de charge doit également empêcher le déplacement relatif des deux tubes lors de la pose dans la partie caténaire de la conduite sous-marine (maintien d'une longueur constante entre les tubes). Le facteur de charge doit également éviter l'écrasement ou l'amenuisement de l'annulaire de la conduite sous-marine lors des variations de longueur de la conduite due aux variations de température.

On notera que le glissement des deux tubes l'un par rapport à l'autre lors de l'ajout d'un quad-joint est un glissement forcé et parfaitement contrôlé par l'intermédiaire des bras de chargement de la tour de pose en J. En effet, en étant capable de reprendre le poids (vertical) d'un quad-joint, ces bras de chargement sont capables d'appliquer des efforts verticaux descendant trois ou quatre fois supérieurs, notamment pour forcer l'alignement des tubes et assurer un soudage sans ajouré les sections à souder.

Le dispositif selon l'invention permet également de maintenir concentrique le tube interne à l'intérieur du tube externe de l'élément de longueur unitaire. Le jeu entre le tube interne et le tube externe reste ainsi constant pendant toute l'opération d'assemblage de l'élément de longueur unitaire de conduite sur la conduite sous-marine.

Le dispositif selon l'invention permet enfin d'assurer un blocage en position des pièces, et notamment des câbles chauffant, des fibres optiques, etc. autour du tube interne de l'élément de longueur unitaire de conduite. De la sorte, le dispositif selon l'invention permet d'éviter tout arrachement de ces pièces lors de la phase de coulissement du tube externe par rapport au tube interne.

Les moyens de serrage peuvent comprendre une pluralité de vis traversant les deux plaques et l'anneau en matériau élastomère et qui sont aptes à être serrées sur des écrous. Dans ce cas, ces vis ont de préférence chacune une classe de résistance de 12,9.

De préférence, au moins l'une des deux plaques est réalisée à partir d'au moins deux secteurs angulaires de plaques. Cette caractéristique a pour avantage de faciliter l'assemblage du dispositif autour de l'épaulement du tube interne.

De préférence également, l'anneau du dispositif est réalisé en éthylène-propylène-diène monomère (EPDM) ayant une dureté shore comprise entre 30 et 90, un module d'Young inférieur à 1MPa et un coefficient de Poisson proche de 0,5. Les plaques du dispositif peuvent quant à elles être réalisées en acier.

De préférence, un tel dispositif est intercalé entre le tube interne et le tube externe à chaque extrémité longitudinale dudit élément de longueur unitaire de conduite sous-marine.

De préférence également, chaque dispositif est assemblé autour d'un épaulement annulaire du tube interne positionné en vis-à-vis de l'épaulement du tube interne. De plus, chaque dispositif assure avantageusement un blocage en position d'au moins un câble chauffant et/ou d'au moins une fibre optique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective et en éclaté du dispositif selon un mode de réalisation de l'invention ;
- la figure 2 est une vue assemblée du dispositif de la figure 1 ;
- les figures 3A et 3B sont des vues partielles et en coupe du dispositif des figures 1 et 2 à l'état non comprimé et à l'état comprimé, respectivement ; et
- la figure 4 est une vue d'un élément de longueur unitaire de conduite sous-marine de type « PIP » équipée de dispositifs selon l'invention.

### Description détaillée de l'invention

L'invention s'applique à la pose d'une conduite coaxiale sous-marine de type « Pipe in Pipe » (ou « PIP »), c'est-à-dire une conduite qui comprend un tube interne destiné à transporter des hydrocarbures issus de puits de production et un tube externe coaxial au précédent, appelé aussi « enveloppe externe », qui est en contact direct avec l'eau environnante.

Ce type de conduite coaxiale sous-marine est typiquement utilisé dans la production offshore d'hydrocarbures par grande profondeur. Dans le cadre de telles installations, les conduites coaxiales sous-marines peuvent être assemblées à terre en plusieurs éléments de longueur unitaire (on parle également de « joints », notamment de « double joints » pour deux éléments unitaires assemblés entre eux, « triple joints » pour trois éléments unitaires assemblés entre eux, « quadruple joints » pour quatre éléments unitaires assemblés entre eux, ou plus génériquement de « quad-joints » pour quadruple sections de tube), de l'ordre de 10 à 100 m selon la capacité de tenue du système de pose. Lors de la pose, ces éléments de longueur unitaire de conduite sous-marine sont raccordés les uns aux autres à bord du navire et au fur et à mesure de leur pose en mer.

L'opération de raccordement d'un élément de longueur unitaire à la conduite sous-marine déjà descendue dans la mer nécessite notamment de positionner verticalement l'élément de longueur unitaire de conduite, de le maintenir dans cette position pendant le soudage de l'extrémité inférieure de son tube interne à l'extrémité supérieure du tube interne de la conduite sous-marine, puis de faire coulisser le tube externe pour le souder à l'extrémité supérieure du tube externe de la conduite sous-marine.

L'invention a pour objet un dispositif d'anti-glissement et d'auto-centrage permettant, au cours de cette opération de raccordement, de maintenir vertical et fixe le tube interne de l'élément de longueur unitaire de conduite à l'intérieur du tube externe, tout en assurant son centrage à l'intérieur du conduit externe.

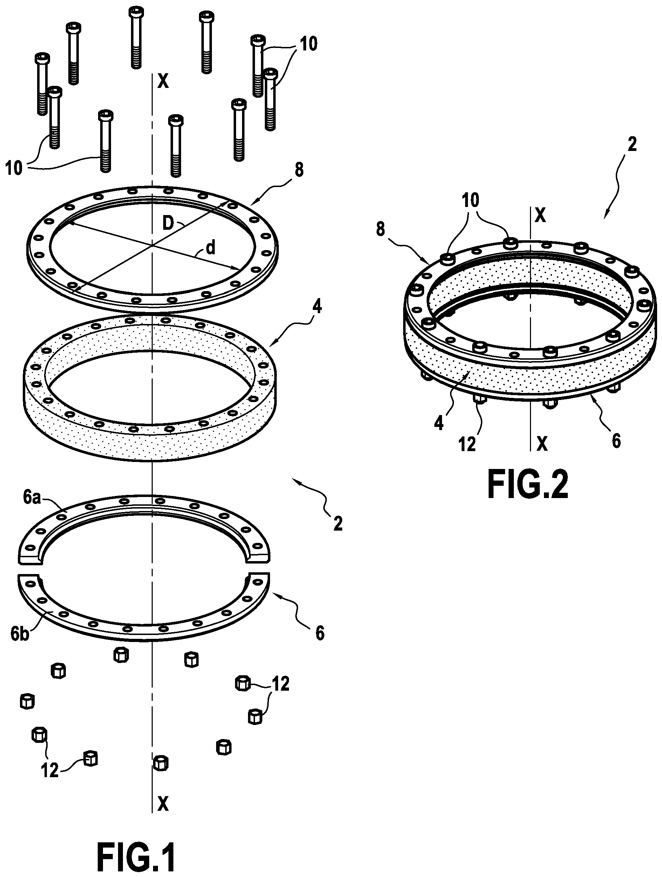

Un exemple d'un tel dispositif 2 est représenté en perspective et en éclaté sur les figures 1 et 2.

Le dispositif 2 comprend notamment un anneau 4 en matériau élastomère qui est pris en sandwich entre deux plaques annulaires 6, 8 métalliques (de préférence en acier) dont le diamètre interne d correspond sensiblement au diamètre externe du tube interne de l'élément de longueur unitaire de conduite sur lequel le dispositif est destiné à être assemblé, et dont le diamètre externe D correspond sensiblement au diamètre interne du tube externe dudit élément de longueur unitaire de conduite.

Le dispositif 2 comprend en outre des moyens de serrage des plaques 6, 8 entre elles pour comprimer l'anneau 4 en matériau élastomère, l'anneau ayant tendance à « gonfler » radialement à la fois vers l'intérieur et vers l'extérieur des plaques sous l'effort de compression.

Les moyens de serrage peuvent être réalisés par l'intermédiaire d'une pluralité de vis 10 traversant de part en part à la fois les deux plaques 6, 8 et l'anneau 4 en matériau élastomère et par des écrous 12 de serrage. Dans l'exemple illustré sur la figure 1, les vis 10 sont au nombre de dix et sont régulièrement espacés autour d'un axe X-X de révolution du dispositif.

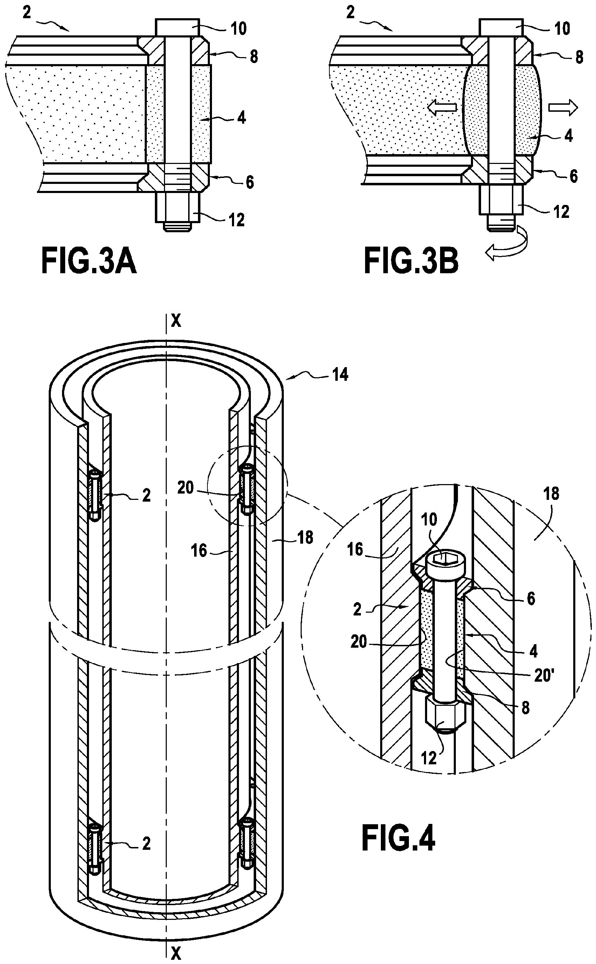

La figure 3A représente le dispositif des figures 1 et 2 en position assemblé et « au repos », c'est-à-dire sans mise en compression de l'anneau 4 en matériau élastomère, tandis que la figure 3B représente le même dispositif après application d'un effort de serrage des écrous 12 sur les vis 10 entraînant une mise en compression de l'anneau 4, et ainsi une déformation de ce dernier visible par une « expansion » radiale vers l'intérieur et l'extérieur.

Lorsque le dispositif est intercalé entre un tube interne et un tube externe d'un élément de longueur unitaire de conduite sous-marine, cette mise en compression de l'anneau du dispositif permet ainsi d'assurer un blocage en position du tube interne à l'intérieur du tube externe.

Le matériau élastomère utilisé pour réaliser l'anneau du dispositif, ainsi que les caractéristiques des vis/écrous et de leur effort de serrage, sont choisis et calibrés en fonction des besoins de blocage du tube interne de l'élément de longueur unitaire de conduite sous-marine à l'intérieur du tube externe.

En particulier, pour l'application particulière envisagée (à savoir raccordement à la verticale d'un élément de longueur unitaire de conduite sur une conduite sous-marine), ces choix et calibrages sont définis de sorte à pouvoir supporter le poids du tube interne mais pas au-delà. Notamment, les caractéristiques du dispositif ne doivent pas empêcher le coulissement du tube externe par rapport au tube interne une fois ce dernier raccordé au tube interne de la conduite sous-marine.

Ainsi, les caractéristiques du dispositif selon l'invention pourront être choisies et calibrées pour permettre à celui-ci d'absorber une charge de compression comprise entre 1 MPa et 5 MPa (avec une charge de compression admissible de 3,5 MPa, le dispositif peut supporter jusqu'à 4,7 tonnes au niveau du tube interne et jusqu'à 5,8 tonnes au niveau du tube externe de l'élément de longueur unitaire de conduite, ces valeurs étant données à titre purement indicatif et dépendent des diamètres et des dimensions des surfaces de contact).

A cet effet, on pourra par exemple choisir comme matériau élastomère pour réaliser l'anneau du dispositif du éthylène-propylène-diène monomère (EPDM) ayant une dureté shore comprise entre 30 et 90, un module d'Young inférieur à 1MPa et un coefficient de Poisson de l'ordre de 0,5. Ainsi, avec un tel coefficient de Poisson, la pression verticale sur les plaques exercées par le serrage des vis est presque égale à la pression de contact sur les parois latérales des tubes.

Avec de telles caractéristiques, les vis 10 utilisées pour le serrage des plaques 6, 8 pourront chacune avoir une classe de résistance de 12,9 de sorte que leur serrage permet un rapprochement des plaques entre elles de l'ordre de 0,5mm environ.

La figure 4 représente deux dispositifs 2 selon l'invention assemblés au niveau de chaque extrémité longitudinale d'un élément de longueur unitaire de conduite sous-marine 14.

Comme décrit précédemment, l'élément de longueur unitaire de conduite 14 comprend un tube interne 16 disposé à l'intérieur d'un tube externe 18 en lui étant coaxial.

Au niveau de chacune de ses extrémités longitudinales, le tube interne 18 est pourvu d'un épaulement 20 annulaire au niveau duquel est plus précisément un dispositif 2 selon l'invention. Cet épaulement 20 est de faible épaisseur (pour ne pas empêcher le glissement contrôlé du tube externe) et peut être obtenu grâce à l'ajout d'une petite longueur de tube interne intégrant l'épaulement aux deux extrémités (il fait saillie radialement vers l'extérieur).

De préférence, le tube externe 18 comprend également, au niveau de sa surface interne, un épaulement annulaire 20' positionné en vis-à-vis de l'épaulement 20 du tube interne de façon à renforcer la sécurité du dispositif (cet épaulement 20' fait saillie radialement vers l'intérieur).

Dans la position encore horizontale de l'élément de longueur unitaire de conduite, l'anneau 4 en matériau élastomère du dispositif est ainsi coulissé autour du tube interne depuis l'une de ses extrémités longitudinales pour venir recouvrir l'épaulement 20 correspondant.

Les deux plaques annulaires 6, 8 sont ensuite positionnées de part et d'autre part de l'anneau 4, la plaque située du côté opposé à l'extrémité du tube interne (ici la plaque 6) étant de préférence réalisée à partir d'au moins deux secteurs angulaires de plaques 6a, 6b (voir la figure 1) de sorte à faciliter son assemblage autour du tube interne.

Les vis 10 et écrous 12 sont alors montés sur le dispositif (sans exercer à ce stade de serrage des écrous) avec les têtes de vis avantageusement tournées vers l'extrémité longitudinale correspondante du tube interne.

Le tube externe 18 de l'élément de longueur unitaire de conduite est ensuite être coulissé longitudinalement autour du tube interne jusqu'à sa position souhaitée. Les vis 10 sont alors serrées dans leurs écrous 12 de sorte à mettre en compression l'anneau 4 en matériau élastomère. Comme indiqué précédemment, cet effort de serrage est calibré selon le poids du tube interne pour permettre aux deux dispositifs de supporter le poids du tube interne (avec une marge de sécurité de 15 à 20% en plus).

L'espace annulaire délimité entre les deux dispositifs 2 peut être rempli par un matériau isolant, notamment par une résine. A cet effet, les dispositifs selon l'invention peuvent avantageusement servir de paroi d'arrêt ou de moule lors de l'injection de la résine pour maintenir cette dernière dans un volume fixe et pouvant être mis sous vide.

L'élément de longueur unitaire de conduite 14 ainsi assemblé peut alors être monté à la verticale par des moyens connus en soi pour permettre son assemblage sur la conduite sous-marine descendue dans la mer.

On notera que, de manière avantageuse, le dispositif selon l'invention peut être utilisé de façon à assurer un blocage en position autour du tube interne de l'élément de longueur unitaire de conduite de diverses pièces, telles que des câbles chauffant, des fibres optiques, etc.

A cet effet, ces câbles chauffant, fibres optiques ou autres qui s'étendent longitudinalement le long du tube interne viennent s'intercaler entre le tube interne et l'anneau en matériau élastomère du dispositif de sorte que la mise en compression de ce dernier assure leur blocage en position.

## Revendications

1. Elément (14) de longueur unitaire de conduite sous-marine pour le transport de fluides, comprenant un tube interne (16), un tube externe (18) monté autour du tube interne en lui étant coaxial, et au moins un dispositif d'anti-glissement et d'auto-centrage (2) qui est intercalé entre le tube interne et le tube externe, chaque dispositif d'anti-glissement et d'auto-centrage comprenant un anneau (4) en matériau élastomère pris en sandwich entre deux plaques annulaires métalliques (6, 8) dont un diamètre interne (d) correspond sensiblement au diamètre du tube interne et un diamètre externe (D) correspond sensiblement au diamètre du tube externe, et des moyens (10, 12) de serrage des plaques entre elles pour comprimer l'anneau en matériau élastomère, **caractérisé en ce que** le dispositif d'anti-glissement et d'auto-centrage est disposé autour d'un épaulement annulaire (20) du tube interne.

2. Elément de longueur unitaire de conduite sous-marine selon la revendication 1, comprenant un tel dispositif d'anti-glissement et d'auto-centrage qui est intercalé entre le tube interne et le tube externe à chaque extrémité longitudinale dudit élément de longueur unitaire de conduite.

3. Elément de longueur unitaire de conduite sous-marine selon l'une des revendications 1 et 2, dans lequel le dispositif d'anti-glissement et d'auto-centrage est assemblé autour d'un épaulement annulaire (20') du tube externe positionné en vis-à-vis de l'épaulement (20) du tube interne.

4. Elément de longueur unitaire de conduite sous-marine selon l'une quelconque des revendications 1 à 3, dans lequel le dispositif d'anti-glissement et d'auto-centrage assure un blocage en position d'au moins un câble chauffant et/ou d'au moins une fibre optique.

5. Elément de longueur unitaire de conduite sous-marine selon l'une quelconque des revendications 1 à 4, dans lequel les moyens de serrage du dispositif d'anti-glissement et d'auto-centrage comprennent une pluralité de vis (10) traversant les deux plaques (6, 8) et l'anneau (4) en matériau élastomère et qui sont aptes à être serrées sur des écrous (12).

6. Elément de longueur unitaire de conduite sous-marine selon la revendication 5, dans lequel les vis (10) ont chacune une classe de résistance de 12,9.

7. Elément de longueur unitaire de conduite sous-marine selon l'une quelconque des revendications 1 à 6, dans lequel au moins l'une des deux plaques (6) du dispositif d'anti-glissement et d'auto-centrage est réalisée à partir d'au moins deux secteurs angulaires de plaques (6a, 6b).

8. Elément de longueur unitaire de conduite sous-marine selon l'une quelconque des revendications 1 à 7, dans lequel l'anneau (4) du dispositif d'anti-glissement et d'auto-centrage est réalisé en éthylène-propylène-diène monomère ayant une dureté shore comprise entre 30 et 90, un module d'Young inférieur à 1MPa et un coefficient de Poisson de l'ordre de 0,5.

9. Elément de longueur unitaire de conduite sous-marine selon l'une quelconque des revendications 1 à 8, dans lequel les plaques (6, 8) du dispositif d'anti-glissement et d'auto-centrage sont en acier.

## Patentansprüche

1. Element (14) mit Einheitslänge einer Unterwasserleitung für den Transport von Fluiden, umfassend ein inneres Rohr (16), ein äußeres Rohr (18), das rund um das innere Rohr koaxial mit diesem montiert ist, und mindestens eine rutschfeste und selbstzentrierende Vorrichtung (2), die zwischen dem inneren Rohr und dem äußeren Rohr angeordnet ist, wobei jede rutschfeste und selbstzentrierende Vorrichtung einen Ring (4) aus elastomerem Material umfasst, der sandwichartig zwischen zwei ringförmigen Metallplatten (6, 8) angeordnet ist, deren Innendurchmesser (d) im Wesentlichen dem Durchmesser des inneren Rohrs entspricht, und deren Außendurchmesser (D) im Wesentlichen dem Durchmesser des äußeren Rohrs entspricht, und Mittel (10, 12) zum Befestigen der Platten aneinander, um den Ring aus elastomerem Material zusammenzudrücken, **dadurch gekennzeichnet, dass** die rutschfeste und selbstzentrierende Vorrichtung rund um eine ringförmige Schulter (20) des inneren Rohrs angeordnet ist.

2. Element mit Einheitslänge einer Unterwasserleitung nach Anspruch 1, umfassend eine rutschfeste und selbstzentrierende Vorrichtung, die zwischen dem inneren Rohr und dem äußeren Rohr an jedem Längsende des Elements mit Einheitslänge der Leitung angeordnet ist.

3. Element mit Einheitslänge einer Unterwasserleitung nach einem der Ansprüche 1 und 2, wobei die rutschfeste und selbstzentrierende Vorrichtung rund um eine ringförmige Schulter (20') des äußeren Rohrs montiert ist, die gegenüber der Schulter (20) des inneren Rohrs angeordnet ist.

4. Element mit Einheitslänge einer Unterwasserleitung nach einem der Ansprüche 1 bis 3, wobei die rutschfeste und selbstzentrierende Vorrichtung eine Blockierung mindestens eines Heizkabels und/oder mindestens einer optischen Faser in Position sicherstellt.

5. Element mit Einheitslänge einer Unterwasserleitung nach einem der Ansprüche 1 bis 4, wobei die Befestigungsmittel der rutschfesten und selbstzentrierenden Vorrichtung eine Vielzahl von Schrauben (10) umfassen, welche die beiden Platten (6, 8) und den Ring (4) aus elastomerem Material durchqueren, und welche geeignet sind, mit Muttern (12) befestigt zu werden.

6. Element mit Einheitslänge einer Unterwasserleitung nach Anspruch 5, wobei die Schrauben (10) jeweils eine Festigkeitsklasse von 12,9 aufweisen.

7. Element mit Einheitslänge einer Unterwasserleitung nach einem der Ansprüche 1 bis 6, wobei mindestens eine der beiden Platten (6) der rutschfesten und selbstzentrierenden Vorrichtung aus mindestens zwei Winkelsektoren (6a, 6b) der Platten besteht.

8. Element mit Einheitslänge einer Unterwasserleitung nach einem der Ansprüche 1 bis 7, wobei der Ring (4) der rutschfesten und selbstzentrierenden Vorrichtung aus Ethylen-Propylen-Dien-Monomer mit einer Shore-Härte zwischen 30 und 90, einem Young-Modul kleiner als 1 MPa und einem Poisson-Koeffizienten in der Größenordnung von 0,5 besteht.

9. Element mit Einheitslänge einer Unterwasserleitung nach einem der Ansprüche 1 bis 8, wobei die Platten (6, 8) der rutschfesten und selbstzentrierenden Vorrichtung aus Stahl sind.

## Claims

1. A unit length element (14) for an undersea fluid transport pipe, the element comprising an inner tube (16), an outer tube (18) mounted coaxially around the inner tube, and at least one anti-slip and self-centering device (2) that is interposed between the inner tube and the outer tube, each anti-slip and self-centering device comprising a ring (4) made of elastomer material sandwiched between two annular metal plates (6, 8) having an inside diameter (d) that corresponds substantially to the diameter of the inner tube and an outside diameter (D) that corresponds substantially to the diameter of the outer tube, and clamping means (10, 12) for clamping the plates together in order to compress the ring made of elastomer material, **characterised in that** the anti-slip and self-centering device is disposed around an annular shoulder (20) of the inner tube.

2. A unit length undersea pipe element according to claim 1, comprising such an anti-slip self-centering device that is interposed between the inner tube and the outer tube at each longitudinal end of said unit length pipe element.

3. A unit length undersea pipe element according to claim 1 or claim 2, wherein the anti-slip and self-centering device is assembled around an annular shoulder (20') of the outer tube positioned facing the shoulder (20) of the inner tube.

4. A unit length undersea pipe element according to any one of claims 1 to 3, wherein the anti-slip and self-centering device blocks in position at least one heating cable and/or at least one optical fiber.

5. A unit length undersea pipe element according to any one of claims 1 to 4, wherein the clamping means of the anti-slip and self-centering device comprise a plurality of screws (10) that pass through the two plates (6, 8) and the ring (4) made of elastomer material, and that are suitable for being tightened in nuts (12).

6. A unit length undersea pipe element according to claim 5, wherein the screws (10) each have a tensile grade of 12.9.

7. A unit length undersea pipe element according to any one of claims 1 to 6, wherein at least one of the two plates (6) of the anti-slip and self-centering device is made from at least two angular plate sectors (6a, 6b).

8. A unit length undersea pipe element according to any one of claims 1 to 7, wherein the ring (4) of the anti-slip and self-centering device is made of ethylene propylene diene monomer having a Shore hardness lying in the range 30 to 90, a Young's modulus of less than 1 MPa, and a Poisson's ratio of the order of 0.5.

9. A unit length undersea pipe element according to any one of claims 1 to 8, wherein the plates (6, 8) of the anti-slip and self-centering device are made of steel.
